# EUROPEAN PATENT APPLICATION

(11) **EP 1 762 600 A1**
(43) Date of publication of application: **14.03.2007**
(21) Application number: 05753497.6
(22) Date of filing: 21.06.2005
(51) Int. Cl.: C09D 11/10, C08F 290/06

(54) **ACTINIC-ENERGY-RAY-CURABLE INK COMPOSITION FOR OVERPRINTING**

(30) Priority: 01.07.2004 JP 2004195817
(71) Applicant: Matsui Chemical Co., Ltd., Kyoto 612-8374 (JP)
(72) Inventor: MANO, Hirotsugu, c/o MATSUI CHEMICAL CO., LTD., Kyoto 6128374 (JP); YAHISA, Takato, c/o MATSUI CHEMICAL CO., LTD., Kyoto 6128374 (JP); HIGASHI, Satohisa, c/o MATSUI CHEMICAL CO., LTD., Kyoto 6128374 (JP); OKUNO, Naoko, c/o MATSUI CHEMICAL CO., LTD., Kyoto 6128374 (JP); OGITA, Takashi, c/o MATSUI CHEMICAL CO., LTD., Kyoto 6128374 (JP); ASHIKAGA, Kazuo, c/o MATSUI CHEMICAL CO., LTD., Kyoto 6128374 (JP)
(74) Representative: HOFFMANN EITLE
(86) International application number: PCT/JP2005/011336
(87) International publication number: WO 2006/003811

(57) **Abstract**

There is provided an active energy curable composition which is suitable as an ink composition for multicoat printing such as multi-color coating. The active energy curable ink composition for multicoat printing comprises (A) a urethane compound comprising a reaction product of a polyol component with a polyisocyanate component having no aromatic ring structure, (B) a resin having an acid value of 5 to 100 mgKOH/g and (C) a reactive diluent having radically polymerizable double bond, in which at least one of the compound (A) and the resin (B) has a radically polymerizable double bond, and only a compound having 1 to 3 radically polymerizable double bonds and having a surface tension of not more than 39 mN/m (at 20°C) is used as the reactive diluent (C).

## Description

### TECHNICAL FIELD

The present invention relates to an active energy curable ink composition for multicoat printing such as multi-color printing.

### BACKGROUND ART

An active energy curable solvent-less composition has a small effect on environment because solvent is not used, and allows high productivity in a curing step using an active energy ray. Therefore research and development are made for applications thereof to coating and printing on various substrates.

However with respect to an active energy curable composition, its component involved in the curing reaction, for example, a reactive diluent is a relatively low molecular weight compound and its crosslinking density becomes high as compared with a solvent-based curable composition in which generally a high molecular weight resin is dissolved in a solvent, and therefore because of such a higher crosslinking density, post-processability thereof is inferior and a range of its applications is limited.

Since an active energy curable composition has such unsolved problems, at present, solvent-based compositions are widely used in a field where post-processing is required, for example, in a field where bending and pressing are carried out after printing or coating.
Patent publication JP5-86152A discloses an active energy polymerizable coating composition comprising a polyfunctional urethane (meth)acrylate having an aromatic ring structure as a polyisocyanate component, a polyfunctional polyester (meth)acrylate, a polyethylene glycol di(meth)acrylate which is a highly hydrophilic reactive diluent, and a photopolymerization initiator, and it is disclosed therein that a coating film being excellent in scratch resistance, weather resistance and processability can be obtained.

However since this composition disclosed in JP5-86152A has an aromatic ring structure, there is a case where yellowing arises when exposing to heat or ultraviolet rays. Such yellowing must be eliminated or reduced as far as possible in a field of printing inks where a color tone is very important. Further since the reactive diluent is highly hydrophilic (surface tension: more than 39 mN/m), the composition cannot be used for offset printing which is a main printing method of an active energy curable ink.

In order to obtain a highly clear design by printing, multicoat printing of many inks is necessary. When only uncured inks such as an oily ink are coated, a color ink is coated on an uncured ink and the overlapped inks are mixed and there arises a problem with lowering of brilliancy by color mixing (subtractive color mixture effect). In addition, in order to avoid mixing of the inks at the interlayer portion between the inks, it is necessary to adjust or change ink conditions such as a viscosity, etc. for every printing machine unit. Also in printing of uncured inks, particularly in printing thereof on non-absorptive substrates such as metal and plastic, a step for curing of the inks by heating is necessary after the printing, that is, it is necessary to blow hot air several minutes onto the printed article being in an uncured state in an oven.

On the other hand, in an active energy curable ink, an active energy ray is irradiated in every printing machine unit for curing of the ink, and a next ink is printed after the curing by irradiation of the active energy ray. Therefore there is no mixing of inks, no adjustment of ink conditions is necessary and also drying by heating in an oven is not necessary for curing.

However in order to secure a specific printing speed, existing active energy curable inks contain a large amount of reactive diluent having four or more functional groups for increasing a curing speed and a crosslinking density is increased, thus hardening an ink layer. Therefore such inks cannot be used in printing for applications where processing is necessary after the printing. For the same reason, separation between the multicoat ink layers easily arises, and attention need be paid to handling of printed article.

Such active energy curable ink compositions used for multi-color printing contain an active energy curable resin and a reactive diluent in addition to a pigment. With respect to the active energy curable resin, there are known a system using epoxy acrylate, a system using urethane acrylate, a system using polyester acrylate and a system using polyether acrylate.

An epoxy acrylate prepolymer is excellent in surface curability, heat resistance, chemical resistance, hardness, electrical properties, weather resistance and adhesion to a substrate, but has a relatively high viscosity and contains hydroxyl group in its molecule. Therefore there is a problem with water resistance and suitability for damping water in offset printing.

A urethane acrylate prepolymer has good toughness, flexibility and elongation and is excellent in chemical resistance, adhesion to a substrate, low temperature characteristics and light resistance, but has a high viscosity and there is a problem with handling thereof (printability) and also yellowing may occur.

A polyester acrylate prepolymer has a low viscosity and a relatively high hardness and the polyester portion can take various structures, which makes it possible to exhibit various properties. However this prepolymer is inferior in surface curability and has a problem with chemical resistance.

A polyether acrylate prepolymer has good flexibility and elongation, is excellent in adhesion to a substrate and low temperature characteristics and has a relatively low viscosity, but there is a problem with toughness, chemical resistance and light resistance.

As mentioned above, the respective active energy curable prepolymers have merits and demerits, and the problems of ink composition for multicoat printing cannot be solved only by combination of those prepolymers.

On the other hand, in order to achieve curing rapidly and obtain a highly hard printing film, compounds having four or more functional groups are used alone or in combination thereof as a reactive diluent.

However when a reactive diluent having four or more functional groups is used, excellent characteristics can be exhibited in the case of curing (printing) of one color ink, but in the case of multi-color printing, an accumulated amount of irradiated energy is increased and the first ink film is subjected to excessive irradiation and becomes very high in a crosslinking density, which results in the coating film having inferior processability.

It is considered to use a reactive diluent having a small number of functional groups, but when printing (irradiation) at a usual operation speed of printer for multi-color printing, initial curing becomes insufficient and a mechanical strength of an obtained ink film is decreased.

Patent Publication JP7-292304A discloses an ink composition for multi-color printing, and a urethane acrylate is used alone as an active energy curable resin and overcoatability is intended to be improved by using various modified urethane acrylates. However it cannot be said that these compositions stand multicoat printing and multi-color printing of three or more colors, do not cause yellowing and are excellent in post-processability. So far an active energy curable ink composition for printing which can be used for multicoat printing such as multi-color printing without problems has not been found.

### DISCLOSURE OF INVENTION

An object of the present invention is to provide an active energy curable ink composition for multicoat printing which gives a mechanical strength for actual use even in a small amount of irradiation energy, is excellent in adhesion to a metallic or plastic substrate and overcoatability (multi-color printability), is free from yellowing and has a proper mechanical strength and flexibility for post-processing.

The present inventors have made intensive studies and found that all of the mentioned problems can be solved by combination use of a specific urethane compound and a functional group-containing resin giving a specific range of an acid value as a binder resin, by introducing a radically polymerizable double bond to at least one of them, and by using, as a reactive diluent, only a (hydrophobic) compound having not more than three radically polymerizable double bonds and having a low surface tension. Thus the present invention was completed.

Namely, the present invention relates to an active energy curable ink composition for multicoat printing which comprises (A) a urethane compound comprising a reaction product of a polyol component with a polyisocyanate component having no aromatic ring structure, (B) a resin having an acid value of 5 to 100 mgKOH/g and (C) a reactive diluent having radically polymerizable double bond, in which at least one of the compound (A) and the resin (B) has a radically polymerizable double bond, and only a compound having 1 to 3 radically polymerizable double bonds and having a surface tension of not more than 39 mN/m (at 20°C) is used as the reactive diluent (C).

In the present invention, a radically polymerizable double bond is required as a crosslinking site for the urethane compound (A) and the resin (B). The radically polymerizable double bond may be introduced to any one of the urethane compound (A) and the resin (B) or to both of them.

The acid value of the resin (B) is within a range of 5 to 100 mgKOH/g. By adjusting the acid value within this range, suitability for damping water at offset printing and resistance to sterilizing treatment (treatment in retort) at high temperature under pressure are improved.

In the present invention, an aromatic ring structure is not contained in the polyisocyanate component of the urethane compound and also in the polyol component, which is preferred from the viewpoint of prevention of yellowing.

A preferred example of a functional group giving an acid value of the resin (B) is carboxyl group because an intermolecular force between the functional group and the urethane bond of the urethane compound is not so strong as in a bond between atoms and processability is hardly influenced.

To the active energy curable ink composition of the present invention may be further mixed an active energy curing catalyst. The mixing of an active energy curing catalyst can decrease an amount of irradiation energy and makes it possible to adjust a degree of curing.

### BEST MODE FOR CARRYING OUT THE INVENTION

The active energy curable ink composition of the present invention for multicoat printing comprises:
(A) a urethane compound comprising a reaction product of a polyol component with a polyisocyanate component having no aromatic ring structure,
(B) a resin having an acid value of 5 to 100 mgKOH/g and
(C) a reactive diluent having radically polymerizable double bond, and is characterized in that:
   (i) at least one of the compound (A) and the resin (B) has a radically polymerizable double bond and
   (ii) only a compound having 1 to 3 radically polymerizable double bonds and having a surface tension of not more than 39 mN/m (at 20°C) is used as the reactive diluent (C).

Namely, when focusing on the urethane compound (A) and the resin (B) having an acid value, the present invention encompasses the following embodiments.
(1) The active energy curable composition comprising:
   (A1) a urethane compound having no radically polymerizable double bond (a compound non-curable with active energy ray),
   (B2) a resin having a radically polymerizable double bond and having an acid value (a resin curable with active energy ray), and
   (C) a hydrophobic reactive diluent having 1 to 3 radically polymerizable double bonds.
(2) The active energy curable composition comprising:
   (A2) a urethane compound having a radically polymerizable double bond (a compound curable with active energy ray),
   (B1) a resin having no radically polymerizable double bond and having an acid value (a resin non-curable with active energy ray), and
   (C) a hydrophobic reactive diluent having 1 to 3 radically polymerizable double bonds.
(3) The active energy curable composition comprising:
   (A2) a urethane compound having a radically polymerizable double bond (a compound curable with active energy ray),
   (B2) a resin having a radically polymerizable double bond and having an acid value (a resin curable with active energy ray), and
   (C) a hydrophobic reactive diluent having 1 to 3 radically polymerizable double bonds.

In addition to those embodiments, it is possible to use other active energy curable resin together, but a reactive diluent having not less than 4 radically polymerizable double bonds and a hydrophilic reactive diluent are not used.

For example, in the case where any one of the urethane bond and the group giving an acid value (for example, carboxyl) is not present, namely in the case of sole use of the urethane compound (A2) having a radically polymerizable double bond or in the case of sole use of the resin (B2) having a radically polymerizable double bond, when curing by using only a reactive diluent having 1 to 3 radically polymerizable double bonds, the curing is insufficient and adhesion to a substrate is inferior. Therefore in order to increase a crosslinking density, if a reactive diluent having not less than 4 double bonds is mixed, curability is enhanced but adhesion to a substrate is lowered and post-processability (for example, bending resistance) is lowered.

Also when neither of the urethane compound (A) nor the resin (B) has a radically polymerizable double bond, namely in the case of using only the urethane compound (A1) and the resin (B1), it is a matter of course that the composition is lack in curability. Further when other active energy curable resin such as a polyether acrylate prepolymer or an epoxy acrylate prepolymer is mixed to the urethane compound (A1) and the resin (B1) and the curing is carried out by using only the reactive diluent having 1 to 3 radically polymerizable double bonds, the composition is lack in curability and necessary mechanical properties and adhesion cannot be obtained because the urethane compound (A1) and the resin (B1) which are not involved in the reaction are contained.

In the above-mentioned embodiments (1) to (3), if the whole or a part of reactive diluent having 1 to 3 radically polymerizable double bonds is replaced by a reactive diluent having not less than 4 double bonds, curability of an obtained composition is enhanced as compared with the composition of the present invention but the obtained composition is cured excessively, post-processability is inferior and adhesion to a substrate is lowered.

Next, each component of the composition of the present invention is explained below.

The urethane compound (A1) which is not curable with active energy and has no radically polymerizable double bond is a reaction product of a polyol component with a polyisocyanate component having no aromatic ring structure.

Examples of the polyol component are, for instance, polyols having no aromatic ring structure such as ethylene glycol, propylene glycol, 1,3-butanediol, 1,4-butanediol, 1,5-pentanediol, 2,2,4-trimethyl-1,3-pentanediol, 1,6-hexanediol, 1,9-nonanediol, neopentyl glycol, diethylene glycol, triethylene glycol, dipropylene glycol, tripropylene glycol, tetramethylene glycol, ditetramethylene glycol, tritetramethylene glycol, 1,4-cyclohexanediol, cyclohexanedimethanol, hydrogenated bisphenol A, glycerine, trimethylolethane, trimethylolpropane and pentaerythritol 2,2-dimethyl-3-hydroxypropyl-2,2-dimethyl-3-hydroxypropionate; polyester polyols having no aromatic ring structure such as reaction products of the above-mentioned polyols with caprolactone and reaction products of the above-mentioned polyols with polybasic acids having no aromatic ring structure such as succinic anhydride, succinic acid, adipic acid, azelaic acid, sebacic acid, tetrahydrophthalic acid, tetrahydrophthalic anhydride, hexahydrophthalic acid, hexahydrophthalic anhydride, himic acid, himic acid anhydride, maleic acid, maleic anhydride, fumaric acid and itaconic acid; polyether polyols having no aromatic ring structure such as polypropylene glycol, polytetramethylene glycol and polyhexamethylene glycol; and polyols having an aromatic ring structure such as bisphenol A, bisphenol F, propylene oxide addition product of bisphenol A, propylene oxide addition product of bisphenol F and polycarbonatediol. Among them, it is desirable to use polyols having no aromatic ring structure in order to further control yellowing.

As the polyisocyanate component, there are used ones having no aromatic ring structure. Examples thereof are, for instance, 1,4-tetramethylene diisocyanate, 1,6-hexamethylene diisocyanate, 2,6-diisocyanate dimercaptoate, 4,4'-methylenebis(cyclohexylisocyanate), methylcyclohexane-2,4-diisocyanate, methylcyclohexane-2,6-diisocyanate, 1,3-(isocyanatomethyl) cyclohexane, 1,4-(isocyanatomethyl) cyclohexane, isophorone diisocyanate, trimethylhexamethylene diisocyanate and a combination of two or more thereof. Among them, preferred are 4,4'-methylenebis(cyclohexylisocyanate), methylcyclohexane-2,4-diisocyanate, methylcyclohexane-2,6-diisocyanate, isophorone diisocyanate and a combination of two or more thereof since yellowing is reduced.

Preferred combinations of the polyol component and the polyisocyanate component are, for example, as follows.

### (Polyol component)

(1) Pentaerythritol 2,2-dimethyl-3-hydroxypropyl-2,2-dimethyl-3-hydroxypropionate
(2) Polyester polyol comprising adipic acid and 1,6-hexanediol (average molecular weight: 300 to 5,000)
(3) Polypropylene glycol (average molecular weight: 300 to 5,000)
(4) Polytetramethylene glycol (average molecular weight: 300 to 4,000) (Polyisocyanate component)

(1) A mixture of methylcyclohexane-2,4-diisocyanate with methylcyclohexane-2,6-diisocyanate
(2) Isophorone diisocyanate
(3) 4,4'-methylenebis(cyclohexylisocyanate)

Preferred are urethane compounds obtained by reacting isophorone diisocyanate with a polyester polyol (average molecular weight: 300 to 5,000) comprising adipic acid and 1,6-hexanediol or polytetramethylene glycol (average molecular weight: 300 to 4,000) from the viewpoint of excellent balance of processability and hardness of the ink layer.

As the urethane compound (A1) which is not curable with active energy, there can be used commercially available compounds. In the case of commercially available compounds containing a solvent, it is desirable to use them after removing the solvent.

Examples of the active energy curable urethane compound (A2) having a radically polymerizable double bond are, for instance, compounds prepared by modifying the active energy non-curable urethane compound (A1) with a hydroxyl-containing (meth)acrylate.

Also among urethane acrylate prepolymers known as an active energy curable material, there can be used prepolymers comprising a polyisocyanate component having no aromatic ring structures. As general purpose urethane acrylate prepolymers, there are reaction products of polyether polyol, polyisocyanate having no aromatic ring structure and hydroxyl-containing (meth)acrylate. Those reaction products have a radically polymerizable double bond derived from the hydroxyl-containing (meth)acrylate at an end thereof.

Examples of the urethane acrylate prepolymer are, for instance, ones disclosed in JP5-9247A, JP10-30012A, etc. which include a reaction product of polyether polyol, polyisocyanate and hydroxyl-containing (meth)acrylate. Among them, from the viewpoint of excellent retort resistance and resistance to yellowing, preferred are urethane acrylate prepolymers which are prepared by reacting one or a plurality of (meth)acrylates having hydroxyl in a molecule thereof such as 2-hydroxyethyl (meth)acrylate and 4-hydroxybutyl (meth)acrylate with a urethane compound which is obtained by reacting a polyester polyol (average molecular weight: 300 to 5,000) comprising adipic acid and 1,6-hexanediol or polytetramethylene glycol (average molecular weight: 300 to 4,000) with isophorone diisocyanate.

In the present invention, commercially available urethane acrylate prepolymers can also be used.

Preferred as the active energy non-curable resin (B1) having no radically polymerizable double bond and having a specific acid value are polyesters obtained by reacting a polybasic acid with a polyol. Also there can be used polyesters obtained by further reacting fat and oil or fatty acids.

Examples of the polybasic acid are, for instance, one or a mixture of adipic acid, phthalic anhydride, isophthalic acid, terephthalic acid, succinic anhydride, azelaic acid, sebacic acid, tetrahydrophthalic anhydride, tetrachlorophthalic anhydride, himic acid anhydride, maleic anhydride, fumaric acid, itaconic acid, trimellitic anhydride, methylcyclohexenetricarboxylic anhydride, pyromellitic anhydride and the like.

Examples of the polyol component are, for instance, ethylene glycol, propylene glycol, 1,3-butanediol, 1,4-butanediol, 1,5-pentanediol, 2,2,4-trimethyl-1,3-pentanediol, 1,6-hexanediol, 1,9-nonanediol, neopentyl glycol, diethylene glycol, triethylene glycol, dipropylene glycol, tripropylene glycol, tetramethylene glycol, ditetramethylene glycol, tritetramethylene glycol, 1,4-cyclohexanediol, cyclohexanedimethanol, hydrogenated bisphenol A, glycerine, trimethylolethane, trimethylolpropane, pentaerythritol 2,2-dimethyl-3-hydroxypropyl-2,2-dimethyl-3-hydroxypropionate, trishydroxymethylaminomethane, pentaerythritol, dipentaerythritol and the like. Those polyol components may be used alone or in a combination thereof.

Those polyesters may be synthesized in the presence of oil, fat, monovalent saturated organic acid, monovalent saturated alcohol or the like, as case demands. Examples of oil are, for instance, linseed oil, tung oil, dehydrated castor oil, soybean oil, safflower oil, rice-bran oil, tall oil, castor oil, palm oil, coconut oil and the like. Examples of fat are, for instance, fatty acid of linseed oil, fatty acid of tung oil, fatty acid of castor oil, fatty acid of soybean oil, fatty acid of safflower oil, fatty acid of rice-bran oil, fatty acid of tall oil, fatty acid of palm oil, fatty acid of coconut oil and the like. Examples of monovalent saturated organic acid are, for instance, nonanoic acid, octanoic acid, undecanoic acid, lauric acid, tridecanoic acid, myristic acid, pentadecanoic acid, palmitic acid, margaric acid, stearic acid, isostearic acid and the like. Examples of monovalent saturated alcohol are, for instance, octyl alcohol, decanol, lauryl alcohol, cetyl alcohol, stearyl alcohol, isostearyl alcohol, glycol esters, phenyl glycol and the like.

Among them, from the viewpoint of good balance of strength of an ink layer and processability, particularly preferred are polyesters obtained by reacting a polybasic acid such as phthalic anhydride, isophthalic acid, terephthalic acid, tetrahydrophthalic anhydride or trimellitic anhydride with a polyol such as propylene glycol, butylene glycol, hexanediol, neopentyl glycol, octanediol, nonanediol, butyl ethyl propanediol, hydrogenated bisphenol A, hydrogenated bisphenol F or trimethylolpropane.

As the active energy curable resin (B2) having a radically polymerizable double bond and having a specific acid value, there can be used polyester acrylate prepolymers known as an active energy curable material. Those prepolymers can be obtained by introducing a radically polymerizable double bond to the active energy non-curable resin (B1) having no radically polymerizable double bond and having a specific acid value by reacting an unsaturated organic acid with the resin (B1).

The polyester acrylate prepolymers known as an active energy curable material are those obtained by reacting a (meth)acrylic acid with a polyester of a polybasic acid and polyol which is used in the active energy non-curable resin (B1) having no radically polymerizable double bond and having a specific acid value. Preferred are polyester acrylate prepolymers obtained by reacting a (meth)acrylic acid with a polyester prepared by reacting a polybasic acid such as phthalic anhydride, isophthalic acid, terephthalic acid, tetrahydrophthalic anhydride or trimellitic anhydride with a polyol such as propylene glycol, butylene glycol, hexanediol, neopentyl glycol, octanediol, nonanediol, butyl ethyl propanediol, hydrogenated bisphenol A, hydrogenated bisphenol F or trimethylolpropane. Also there can be used commercially available polyester acrylate prepolymers

Examples of the functional group giving an acid value to the active energy non-curable resin (B1) and the active energy curable resin (B2) are carboxyl group, phosphoric acid group, sulfonic acid group and the like. Among them, carboxyl group is preferred since storage stability of the ink composition is good. The introduction of the acid value can be carried out by adjusting the adding amounts of polybasic acid, polyol and (meth)acrylic acid in the esterification reaction.

It is necessary that the acid value is 5 to 100 mgKOH/g. If the acid value is lower than 5 mgKOH/g, the amount of functional groups generating an intermolecular force with the urethane bond of the urethane compound (A) is decreased and a mechanical strength and hardness of the ink layer are lowered. If the acid value exceeds 100 mgKOH/g, hydrophilic property is increased excessively and water resistance and resistance to boiling water (resistance to treatment in retort) are lowered. A preferred acid value is not less than 10 mgKOH/g, further not less than 15 mgKOH/g, and not more than 80 mgKOH/g, further not more than 60 mgKOH/g.

It is necessary that the reactive diluent (C) used in the present invention has 1 to 3 radically polymerizable double bonds and has a surface tension of not more than 39 mN/m (at 20°C).

When the number of radically polymerizable double bonds is not more than 3, as mentioned above, excessive curing (crosslinking) does not arise and post-processability becomes good. The number of bonds is preferably 2 to 3, particularly 3.

Also when the surface tension (at 20°C) is not more than 39 mN/m, the ink composition can be made hydrophobic (lipophilic), and in the case of offset printing using water, bleeding of ink can be avoided. The surface tension is preferably not more than 39 mN/m, further not more than 38 mN/m, and a lower limit thereof is usually 28 mN/m, further 29 mN/m.

Examples of the reactive diluent satisfying those requirements are, for instance, as follows.

### (Reactive diluents having one radically polymerizable double bond)

Compounds having a surface tension of not more than 39 mN/m (at 20°C) among methyl (meth)acrylate, ethyl (meth)acrylate, butyl (meth)acrylate, 2-ethylhexyl (meth)acrylate, 2-ethylhexylcarbitol (meth)acrylate, 3-methoxybutyl (meth)acrylate, benzyl (meth)acrylate, butoxyethyl (meth)acrylate, cetyl (meth)acrylate, cyclohexyl (meth)acrylate, dicyclopentanyl (meth)acrylate, dicyclopentenyl (meth)acrylate, isoamyl (meth)acrylate, isobornyl (meth)acrylate, isobutyl (meth)acrylate, isodecyl (meth)acrylate, isooctyl (meth)acrylate, isostearyl (meth)acrylate, isomyristyl (meth)acrylate, lauryl (meth)acrylate, methoxypropylene glycol (meth)acrylate, methoxydipropylene glycol (meth)acrylate, methoxytripropylene glycol (meth)acrylate, methoxypolypropylene glycol (meth)acrylate, neopentylbenzoate (meth)acrylate, nonylphenoxypolyethylene glycol (meth)acrylate, nonylphenoxypolypropylene glycol (meth)acrylate, octafluoropentyl (meth)acrylate, octoxypolyethylene glycol polypropylene glycol (meth)acrylate, octyl (meth)acrylate, decyl (meth)acrylate, paracumylphenoxyethylene glycol perfluorooctylethyl (meth)acrylate, phenoxyethylene glycol (meth)acrylate, phenoxydiethylene glycol (meth)acrylate, phenoxytriethylene glycol (meth)acrylate, phenoxypolyethylene glycol (meth)acrylate, phenoxypropylene glycol (meth)acrylate, phenoxydipropylene glycol (meth)acrylate, phenoxytripropylene glycol (meth)acrylate, phenoxypolypropylene glycol (meth)acrylate, stearyl (meth)acrylate, stearylpolyethylene glycol (meth)acrylate, t-butyl (meth)acrylate, t-butylcyclohexyl (meth)acrylate, tetrafluoropropylene (meth)acrylate, tetrafurfuryl (meth)acrylate, tribromophenyl (meth)acrylate, tribromophenyl ethylene glycol (meth)acrylate, tridecyl (meth)acrylate, trifluoroethyl (meth)acrylate, and their ethylene oxide-modified products, propylene oxide-modified products and caprolactone-modified products.

### (Reactive diluents having two radically polymerizable double bonds)

Compounds having a surface tension of not more than 39 mN/m (at 20°C) among 2-ethyl-2-butylpropanediol (meth)acrylate, ethylene glycol di(meth)acrylate, diethylene glycol di(meth)acrylate, propylene glycol di(meth)acrylate, dipropylene glycol di(meth)acrylate, tripropylene glycol di(meth)acrylate, polypropylene glycol di(meth)acrylate, dimethyloldicyclopentane di(meth)acrylate, 1,3-butylene glycol di(meth)acrylate, 1,6-hexanediol di(meth)acrylate, allyloxypolyethylene glycol (meth)acrylate, 1,9-nonanediol di(meth)acrylate, 1,10-decanediol di(meth)acrylate, bisphenol A di(meth)acrylate, neopentyl glycol di(meth)acrylate, hydroxypivalic acid neopentyl glycol di(meth)acrylate, tricyclodecanedimethanol di(meth)acrylate, trimethylolpropane benzoate di(meth)acrylate, and their ethylene oxide-modified products, propylene oxide-modified products and caprolactone-modified products.

### (Reactive diluents having three radically polymerizable double bonds)

Compounds having a surface tension of not more than 39 mN/m (at 20°C) among glycerine tri(meth)acrylate, trimethylolpropane tri(meth)acrylate, and their ethylene oxide-modified products, propylene oxide-modified products and caprolactone-modified products.

Those reactive diluents may be used alone or in a combination of two or more thereof in consideration of balance of diluting property and reactivity (curability). It is preferable to select the reactive diluent from the above-mentioned ones having 1 to 3 radically polymerizable double bonds.

More specifically preferred are one or two or more of compounds having a surface tension of not more than 39 mN/m (at 20°C) among 2-ethylhexyl (meth)acrylate, 2-ethylhexylcarbitol (meth)acrylate, 3-methoxybutyl (meth)acrylate, cyclohexyl (meth)acrylate, isobornyl (meth)acrylate, lauryl (meth)acrylate, neopentylbenzoate (meth)acrylate, octafluoropentyl (meth)acrylate, octyl (meth)acrylate, decyl (meth)acrylate, t-butyl (meth)acrylate, and their ethylene oxide-modified products, propylene oxide-modified products and caprolactone-modified products (those having one radically polymerizable double bond); 2-ethyl-2-butylpropanediol (meth)acrylate, dimethyloldicyclopentane di(meth)acrylate, 1,3-butylene glycol di(meth)acrylate, 1,6-hexanediol di(meth)acrylate, allyloxypolyethylene glycol (meth)acrylate, 1,9-nonanediol di(meth)acrylate, 1,10-decanediol di(meth)acrylate, bisphenol A di(meth)acrylate, neopentyl glycol di(meth)acrylate, hydroxypivalic acid neopentyl glycol di(meth)acrylate, tricyclodecanedimethanol di(meth)acrylate, trimethylolpropane benzoate di(meth)acrylate, and their ethylene oxide-modified products, propylene oxide-modified products and caprolactone-modified products (those having two radically polymerizable double bonds); and trimethylolpropane tri(meth)acrylate, and their ethylene oxide-modified products, propylene oxide-modified products and caprolactone-modified products (those having three radically polymerizable double bonds). Those compounds are preferred from the viewpoint of excellent active energy curability and also from the viewpoint of suitability for damping water at offset printing.

Next, the proportions of the urethane compound (A), the resin (B) having a specific acid value and the reactive diluent (C) having radically polymerizable double bond are explained below.

Irrespective of which of the compound (A) and the resin (B) has a radically polymerizable double bond, it is preferable to blend the urethane compound (A) and the resin (B) so that a mole ratio of the urethane bond to the functional group giving an acid value (number of moles of urethane bond/number of moles of functional group giving an acid value) is within a range of 0.5 to 5. When the mole ratio is within this range, an intermolecular force between the urethane bond and the functional group giving an acid value can be obtained particularly efficiently. The mole ratio of the urethane bond to the functional group giving an acid value is preferably not less than 1 and not more than 4.

As mentioned above, the radically polymerizable double bond giving active energy curability may be contained in either of the urethane compound (A) or the resin (B) or in both of them. In any cases, the double bonds should be contained in such an amount that a minimum hardness and mechanical strength can be imparted to the coating film. The amount varies depending on kind and combination of the resins, an amount of the reactive diluent (C) and the number of radically polymerizable double bonds contained, and is optionally selected in the respective embodiments.

It is preferable that the amount of the reactive diluent (C) is not less than 5 parts by mass, further not less than 10 parts by mass and not more than 1,000 parts by mass, further not more than 200 parts by mass based on 100 parts by mass of the sum of urethane compound (A2) and/or resin (B2) having a radically polymerizable double bond. If the amount of the reactive diluent (C) is too large, there is a tendency that active energy curability is lowered, and if the amount is too small, there is a tendency that flowability of the ink is lowered and printing is difficult to be carried out.

To the active energy curable ink composition of the present invention may be blended, for example, an active energy curing catalyst, photosensitizer and the like.

Examples of the active energy curing catalyst are, for instance, benzoins such as benzoin, benzoin methyl ether, benzoin butyl ether, benzoin isopropyl ether and alkyl ethers thereof; acetophenones such as acetophenone, 2,2-dimethoxy-2-phenylacetophenone, 2,2-diethoxy-2-phenylacetophenone, 1,1-dichloroacetophenone, 1-hydroxycyclohexylphenylketone, 2-hydroxycyclohexylphenylketone and 2-methyl-1-[4-(methylthio)phenyl]-2-morpholino-propane-1-one; anthraquinones such as 2-methylanthraquinone and 2-aminoanthraquinone; thioxanthones such as 2,4-dimethylthioxanthone, 2,4-diethylthioxanthone, 2-chlorothioxanthone and 2,4-diisopropylthioxanthone; and the like.

Among them, preferred are benzoins, particularly benzoin from the viewpoint of good photo-reactivity.

Also tertiary amines such as triethanolamine, benzoic acid and a curing accelerator may be used in combination with the curing catalyst.

Further additives which are usually used in the field of printing can be blended to the active energy curable ink composition of the present invention within a range not lowering effects of the present invention depending on a printing method and applications of printed articles. Examples of the additive are, for instance, various pigments, filler, wax, leveling agent, flatting agent, defoaming agent, dispersant, surface treating agent, antistatic agent, polymerization inhibitor, antioxidant, conductive material, silicon and the like.

Examples of the pigment are, for instance, white pigments such as zinc oxide, white lead, lead sulfate, lithopone, zinc sulfide, titanium oxide and antimony white; yellow pigments such as chrome yellow, zinc yellow, barium chromate, cadmium yellow, iron oxide yellow, yellow ocher, titanium yellow, lead cyanamide, calcium plumbate, Naphthol Yellow S, Hansa Yellow 10G, Hansa Yellow 5G, Hansa Yellow 3G, Hansa Yellow G, Hansa Yellow GR, Hansa Yellow A, Hansa Yellow RN, Hansa Yellow R, Pigment Yellow L, Benzidine Yellow, Benzidine Yellow G, Benzidine Yellow GR, Permanent Yellow NCG, Vulcan Fast Yellow 5G, Vulcan Fast Yellow R, Tartrazine Lake, Quinoline Yellow Lake, Anthragene Yellow 6GL, Permanent Yellow FGL, Permanent Yellow H10G, Permanent Yellow HR, Anthrapyrimidine Yellow, Cromophtal Yellow 3G and Novaperm Yellow H2G; orange pigments such as chrome orange, chrome vermilion, Sudan I, Permanent Orange, Lithol Fast Orange 3GL, Permanent Orange GTR, Hansa Yellow 3R, Vulcan Fast Orange GG, Vulcan Fast Orange G, Persian Orange, Indanthrene Brilliant Orange GK, Indanthrene Brilliant Orange RK, Indanthrene Brilliant Orange GR and Novaperm Orange HL; brown pigments such as iron oxide, umber, Permanent Brown FG and para brown; red pigments such as red iron oxide, red lead, vermilion, cadmium red, cadmium mercury red, antimony vermilion, Permanent Red 4R, para red, fire red, p-chloro-o-nitroaniline red, Lithol Fast Scarlet G, Brilliant Fast Scarlet, Brilliant Fast Scarlet containing red lead, Brilliant Carmine BS, Permanent Red F2R, Permanent Red F4R, Permanent Red FRL, Permanent Red FRLL, Permanent Red F4RH, Fast Scarlet VD, Vulcan Fast Rubine B, Vulcan Fast Pink G, Light Fast Red Toner B, Permanent Carmine FB, Pyrazolone Red, Lithol Red, Lake Red C, Lake Red D, Anthosine B Lake, Brilliant Scarlet G, Lithol Rubine GK, Permanent Red F5R, Brilliant Carmine 6B, Pigment Scarlet 3B, Bordeaux 5B, toluidine maroon, Permanent Bordeaux F2R, Helio Bordeaux BL, Bordeaux 10B, BON Maroon Lite, BON Maroon Medium, eosine lake, Rhodamine Lake B, Rhodamine Lake Y, Alizarin Lake, Thioindigo Red B, Thioindigo Maroon, Permanent Red FGR, PV Carmine HR, Watchung Red Mn, Cromophtal Red BR, Monolite Fast Red YS, Permanent Red BL, Permanent Carmine FBB, Permanent Red F5RK, PV Carmine HF3C, PV Carmine HF4C, PV Fast Red HF4B, Paliogen Red 3910, cadmium hydrogensulfide, Permanent Pink E, Lithol Red, Pyrazolone Red, Watchung Red calcium salt and Brilliant Carmine 3B; violet pigments such as manganese violet, cobalt violet, Fast Violet B, Methyl Violet Lake and Dioxazine Violet; blue pigments such as ultramarine blue, prussian blue, cobalt blue, cerulean blue, zaffer, Alkali Blue Lake, Peacock Blue Lake, Fanatone Blue 6G, Victoria Blue lake, non-metallic Phthalocyanine Blue, Phthalocyanine Blue, partly chlorinated Phthalocyanine Blue, Fast Sky Blue, Indanthrene Blue RS, Indanthrene Blue BC and indigo; green pigments such as chrome green, zinc green, chromium oxide, viridian, emerald green, cobalt green, Pigment Green B, Naphthol Green B, Green Gold, Acid Green Lake, Malachite Green Lake, Phthalocyanine Green and polychloro-bromo-Cu-phthalocyanine; black pigments such as carbon black, acetylene black, lamp black, bone black, aniline black, graphite, black iron oxide, mineral black and cyanine black; extender pigments such as baryte powder, barium sulfate, barium carbonate, lime stone powder, calcium carbonate, gypsum, clay, silica powder, white carbon, diatomaceous earth, talc, magnesium carbonate, alumina white, Gloss White and satin white; fluorescent pigments such as zinc silicate, zinc cadmium sulfide, calcium sulfide, strontium sulfide and calcium tungstate; and flaked metallic pigments such as aluminum powder, bronze powder, copper powder, tin powder, lead powder and zinc powder.

The active energy curable ink composition of the present invention can be prepared by mixing the urethane compound (A), the resin (B), the reactive diluent (C) and as case demands, additives such as a pigment and photo-initiator and then milling and stirring the mixture while adjusting a tack value within a proper range.

Because the liquid reactive diluent is contained in the ink composition of the present invention, a solvent is not necessary particularly. However depending on applications, a solvent which does not react with the components (A), (B) and (C) may be used. By using no solvent, there can be exhibited effects such as saving of resources, energy saving and control of pollution of atmosphere.

The active energy curable ink composition of the present invention is, after printing, subjected to irradiation of active energy ray for curing to make an ink film. There can be used electromagnetic wave such as ultraviolet rays, visible light and infrared rays and electron beam as an active energy ray. Among them, ultraviolet rays are preferred since a curing rate is high, equipment for irradiation of active energy ray which is generally used can be used, and characteristics of a cured film are good.

A substrate to be printed is not limited particularly. Examples thereof are metallic substrates, plastic substrates and the like.

Examples of the metallic substrate are metals such as steel, stainless steel and aluminum; various plated metals; metals pre-coated or laminated with various plastics; and the like. Examples of the plastic substrate are, for instance, films, sheets and boards of polyethylene, polypropylene, polystyrene, polyvinyl chloride, polyester, acrylic resin, urethane resin and surface-treated films, sheets and boards thereof. Also there can be used acrylic resin-coated and urethane resin-coated papers as a substrate.

The ink composition of the present invention can be applied to offset printing, gravure printing, flexographic printing, silk screen printing and the like. The ink composition is suitable and useful particularly for offset printing since high quality of printed articles can be obtained at high speed at low cost as compared with other printing methods.

The ink composition of the present invention is suitable as a printing ink, particularly as a printing ink for multi-color printing, and is excellent as an ink composition for multicoat printing (multi-color printing) for articles which are subjected to pressing, drawing, punching, bending, and the like after the printing.

Examples of products requiring post-processing after multicoat printing (multi-color printing) are, for instance, metallic packages such as beverage cans, decorated cans for confectionery, etc. and cans for foods; transparent plastic cases for packaging cosmetics; products made by softening printed articles by heating and adhering them to curved articles (for example, dummy cans for vending machine); packages for cells, toothbrush, etc. made by heat-molding to the shapes thereof; heat-shrinkable film used for labels of plastic bottles; and the like. By using the ink composition of the present invention, inks of 2 to 6 colors can be printed continuously.

Then multi-color offset printing by active energy curing method is explained below.

In usual printing, an ink image is transferred and printed from a printing plate directly on an article to be printed. On the other hand, the multi-color offset printing by active energy curing method is a method of once transferring an image of a printed plate to a blanket and then printing on an article to be printed, and the printed ink is irradiated with active energy ray to form a cured ink layer. By repeating these procedures continuously, a multicoated article can be obtained.

The offset printing is featured by being capable of printing a precise image on various articles vividly, being capable of reproducing gradation having soft tone, thus being suitable for multi-color printing, and being capable of printing at high speed.

To the printing plate which is important for forming an image is continuously supplied damping water from a damping water circulation system. A pH value of the damping water is adjusted to be constant by adding alcohol and surfactant thereto. The damping water has functions of regulating transfer of ink to a printing area and a non-printing area, preventing ink from adhering to the non-printing area, washing the non-printing area and printing area, and maintaining the temperature of the plate constant. Generally speaking, hydrophilic materials cannot be used as starting materials for the ink for offset printing. An offset printing ink which has inferior suitability for the damping water absorbs the damping water by contact thereto and is emulsified. The emulsified ink loses flowability, thereby causing problems that printing cannot be carried out and the emulsified ink dissolved in the damping water adheres to the non-printing area and stains a printed article.

In the active energy curable composition of the present invention, since a monofunctional, bifunctional or trifunctional compound (having 1 to 3 radically polymerizable double bonds) is used as the reactive diluent, an initial mechanical strength by the curing reaction is not so high, but the intermolecular force between the urethane bond and the functional group giving an acid value compensates for insufficiency of the mechanical strength and sufficient properties of the ink film can be obtained. Also even if an accumulated amount of irradiated energy is increased, there arises no excessive curing (crosslinking) because the number of functional groups is small, and proper mechanical properties can be maintained by the intermolecular force between the urethane bond and the functional group giving an acid value.

Further the intermolecular force between the urethane bond and the functional group giving an acid value imparts flexibility to the ink film and gives affinity (adhesion) between the multi-color ink films. Therefore no back trapping arises, and good adhesion to a substrate, interlayer adhesion and following ability for mechanical processing after the printing can be obtained, resulting in good finishing.

In the multi-color printing ink composition of the present invention, the reactive diluent having few functional groups is used, thereby preventing the ink film from being cured excessively. Therefore the ink composition can be used for any of ink layers. However depending on purposes and applications, components of the ink composition and amounts thereof may be changed for each ink layer in consideration of an accumulated amount of irradiated energy and kind of color pigment to be used.

### EXAMPLES

Then the present invention is explained by means of examples, but is not limited to them. In the examples, "part" represents a part by mass.

### PREPARATION EXAMPLE 1

### (Preparation of polyurethane having no radically polymerizable double bond)

A solvent of Polyurethane 520 (polyurethane which is available from Arakawa Chemical Industries Co., Ltd. and comprises an aliphatic polyisocyanate component and a polyol component having no aromatic ring structure) was distilled off at 100°C under reduced pressure of 15 to 40 kPa, to obtain a urethane compound (A1a). To 60 parts of this urethane compound (A1a) was added, as a reactive diluent, 40 parts of trimethylolpropanepropoxy triacrylate (Aronix M-310 available from Toa Gosei Co., Ltd.) having a surface tension of 39 mN/m at 20°C to prepare a liquid component (A1a).

### PREPARATION EXAMPLE 2

### (Preparation of polyurethane having radically polymerizable double bond)

55.5 Parts of adipic acid was reacted with 44.5 parts of 1,4-tetramethylene glycol until generation of water ceased, and a polyester polyol (average molecular weight: 800) was obtained. 42.1 Parts of this polyester polyol, 37.4 parts of isophorone diisocyanate and 20.5 parts of 2-hydroxyethyl acrylate were reacted at 90°C for five hours, and urethane acrylate (A2a) having NCO content of less than 0.1% was obtained. To 60 parts of this urethane acrylate (A2a) was added 40 parts of Aronix M-310 as a reactive diluent to prepare a liquid component (A2a).

### PREPARATION EXAMPLE 3

### (Preparation of polyester having no radically polymerizable double bond)

48 Parts of phthalic anhydride, 37 parts of bisphenol A and 15 parts of 1,6-hexanediol were subjected to esterification reaction at 230°C to synthesize polyester (B1a). The obtained polyester contained carboxyl group and had an acid value of 50 mgKOH/g. To 60 parts of this polyester (B1a) was added 40 parts of Aronix M-310 as a reactive diluent to prepare a liquid component (B1a).

### PREPARATION EXAMPLE 4

### (Preparation of polyester having radically polymerizable double bond)

42 Parts of phthalic anhydride, 36 parts of bisphenol A and 19 parts of 1,6-hexanediol were subjected to esterification reaction at 230°C until generation of water ceased. Then while blowing air at 100° to 130°C, 3 parts of acrylic acid was introduced to the reaction system and the esterification reaction was continued until generation of water ceased, to obtain polyester acrylate (B2a). The obtained polyester acrylate contained carboxyl group and radically polymerizable double bond derived from the acrylic acid, and had an acid value of 10 mgKOH/g. To 60 parts of this polyester acrylate (B2a) was added 40 parts of Aronix M-310 as a reactive diluent to prepare a liquid component (B2a).

### EXAMPLE 1

A white ink having a tack value of 15 was prepared by mixing the following components in amounts mentioned below and then milling and stirring the mixture by using a three-roll mill.

| Components | Amount |
|---|---|
| Urethane compound (A1a) | 25 parts |
| Resin (B2a) | 25 parts |
| Titanium oxide (white pigment) | 40 parts |
| Ultraviolet curing catalyst 1 | 3 parts |
| Ultraviolet curing catalyst 2 | 3 parts |
| Hydroquinone (polymerization inhibitor) | 0.5 part |
| Aronix M-310 | Amount for obtaining a tack value of 15 |

In the above preparation, TIPAQUE CR-58 available from Ishihara Sangyo Kaisha Ltd. was used as a titanium oxide, and KAYACURE DETX-S and KAYACURE DMBI, both of which were available from Nippon Kayaku Co., Ltd. were used as the ultraviolet curing catalyst 1 and ultraviolet curing catalyst 2, respectively.

The tack means a restoring force of the ink film in a predetermined width between the two rotating rollers which is generated by shearing of the ink layer on the surfaces of the rollers. The tack value is measured with a rotary tack meter designed for measuring the tack (JIS K5700).

This white ink was printed in a coating thickness of 1.5 µm by offset printing on a steel panel (200 µm thick) pre-coated with polyester to make an uncured panel. Then the following tests were carried out by using this uncured panel. The results are shown in Table 1.

### (Curability test 1: Set to touch)

The uncured panel is subjected to irradiation of ultraviolet rays at a peak illumination of 1,000 mW/cm² with an ultraviolet emitter (Model UVC-2519 with 160 W/cm metal halide lamp available from Ushio Inc.). A conveyor speed for feeding the panel into the emitter is changed, and whether or not the intended surface condition (film surface does not feel wet) is obtained is evaluated for each conveyor speed by touching the film surface with a finger. The surface condition is evaluated in the following five conveyor speeds. When the feeling of wet disappears at higher conveyor speed, curability is good.
5: not less than 80 m/min
4: not less than 70 m/min and less than 80 m/min
3: not less than 60 m/min and less than 70 m/min
2: not less than 50 m/min and less than 60 m/min
1: less than 50 m/min

### (Curability test 2: Pencil hardness)

The uncured panel is subjected to irradiation of ultraviolet rays at a peak illumination of 1,000 mW/cm² at an accumulated amount of ultraviolet rays of 50 mJ/cm² with an ultraviolet emitter (Model UVC-2519 with 160 W/cm metal halide lamp available from Ushio Inc.). A surface hardness of the obtained cured film is measured according to scratch hardness test (pencil hardness method) of JIS K5600.

### (Adhesion test 1: Adhesion to a substrate)

The uncured panel is subjected to irradiation of ultraviolet rays at a peak illumination of 1,000 mW/cm² at an accumulated amount of ultraviolet rays of 100 mJ/cm² with an ultraviolet emitter (Model UVC-2519 with 160 W/cm metal halide lamp available from Ushio Inc.). With respect to adhesion to a substrate of the obtained cured film, a peeling test is carried out according to JIS K5600 (cross-cut method).

### (Adhesion test 2: Overcoatability)

The uncured panel is subjected to irradiation of ultraviolet rays at a peak illumination of 1,000 mW/cm² at an accumulated amount of ultraviolet rays of 100 mJ/cm² with an ultraviolet emitter (Model UVC-2519 with 160 W/cm metal halide lamp available from Ushio Inc.). The same white ink is printed on the obtained cured film in a thickness of 1.5 µm and is subjected to irradiation of ultraviolet rays under the same irradiation conditions to obtain a recoated cured film. Then an adhesive tape is adhered to the obtained recoated cured film and peeled off to evaluate an intercoat adhesion between the cured film layers. The evaluation is carried out by the following criteria.
A: There is no peeling.
B: There is partly recognized an intercoat adhesion failure.
C: Film layers are completely separated from each other.

### (Bending resistance test: Processability)

The uncured panel is subjected to irradiation of ultraviolet rays at a peak illumination of 1,000 mW/cm² at an accumulated amount of ultraviolet rays of 100 mJ/cm² with an ultraviolet emitter (Model UVC-2519 with 160 W/cm metal halide lamp available from Ushio Inc.). A bending resistance test (cylindrical mandrel method) is carried out using the obtained cured panel according to JIS K5600, and a diameter of mandrel in which cracking arises on the cured film is investigated. The evaluation is carried out under the following criteria.
A: Not more than 4 mm of mandrel diameter
B: 5 to 8 mm of mandrel diameter
C: More than 8mm of mandrel diameter

### EXAMPLES 2 and 3

White inks having a tack value of 15 were prepared in the same manner as in Example 1 except that the components shown in Table 1 were used in amounts shown in Table 1.

The obtained inks were printed in the same manner as in Example 1 to produce uncured panels. Those uncured panels were subjected to curing treatment in the same manner as in Example 1 to evaluate various properties. The results are shown in Table 1.

### COMPARATIVE EXAMPLES 1 to 6

White inks having a tack value of 15 were prepared in the same manner as in Example 1 except that the components shown in Table 1 were used in amounts shown in Table 1.

In Table 1, the reactive diluent 2 is Ebecryl 140 (available from DAICEL·UCB CO., LTD.) which is ditrimethylolpropane tetraacrylate having four radically polymerizable double bonds.

The obtained inks were printed in the same manner as in Example 1 to produce uncured panels. Those uncured panels were subjected to curing treatment in the same manner as in Example 1 to evaluate various properties. The results are shown in Table 1.

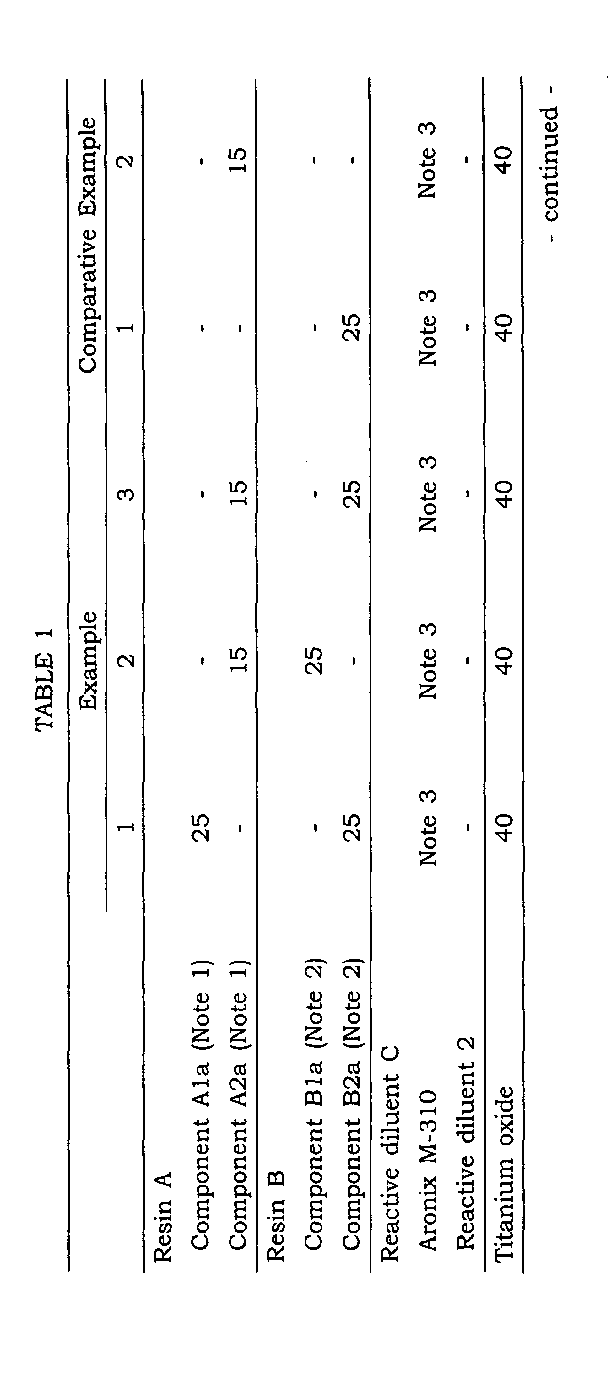

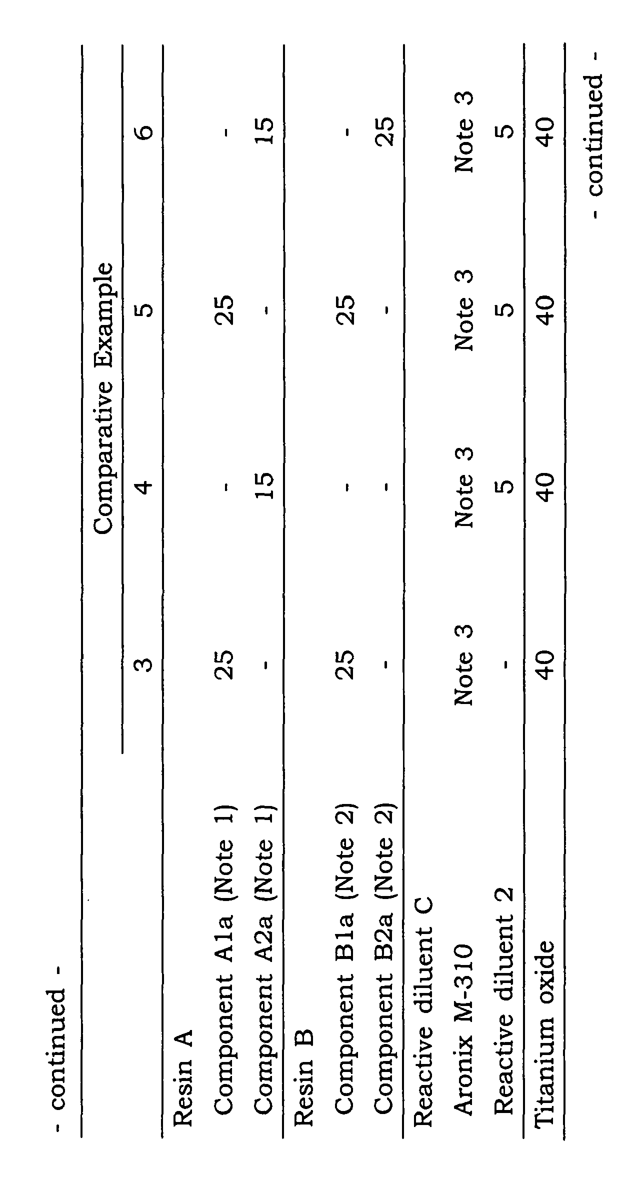

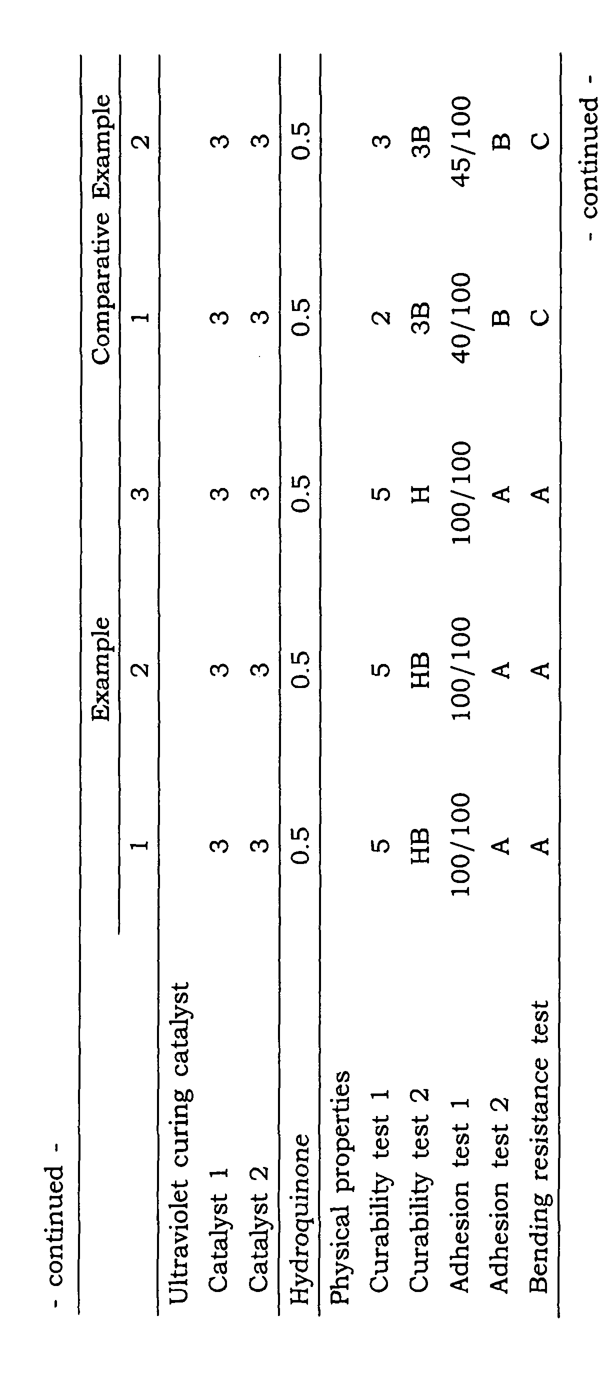

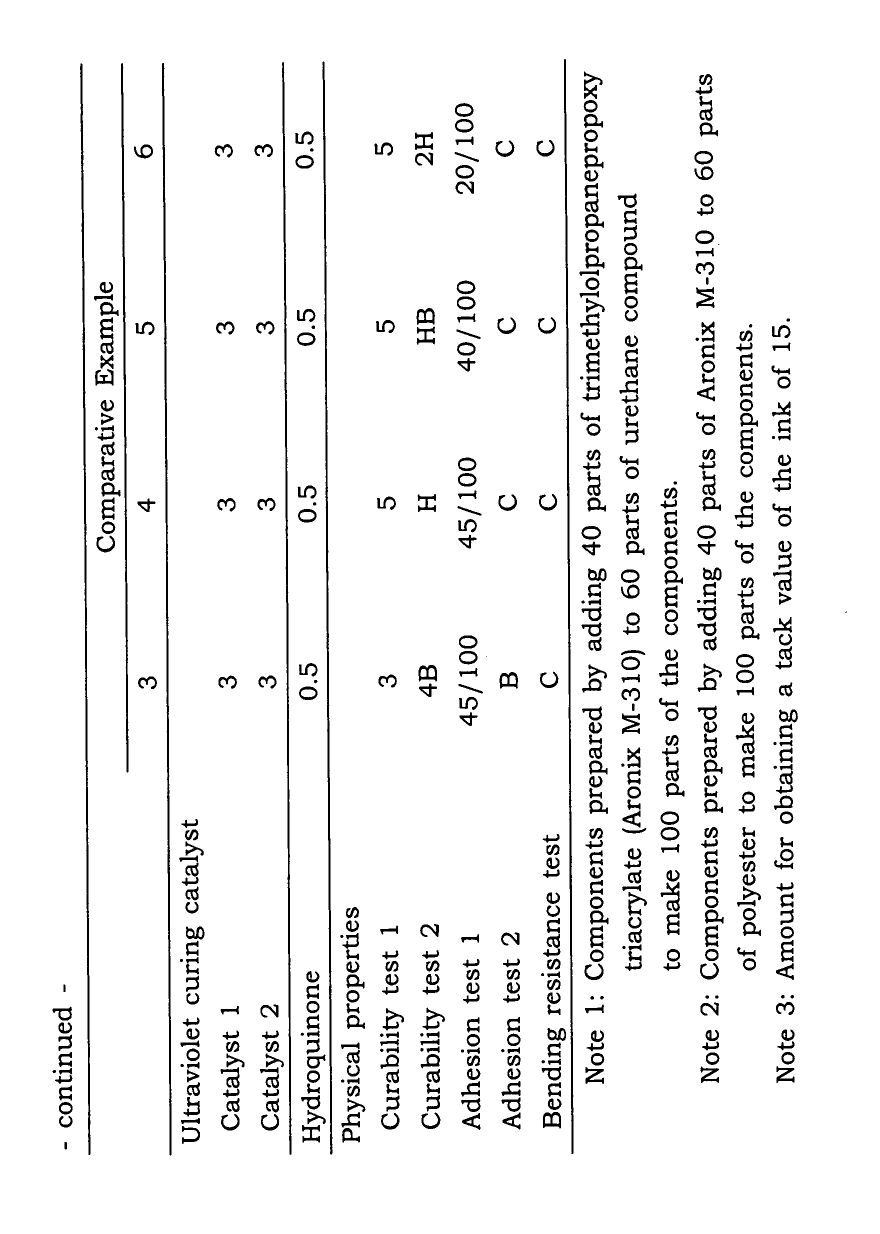

### EXAMPLE 4

### (6-Color printing)

### 1st layer (white pattern printing)

A white ink having a tack value of 15 was prepared using the same components and amounts as in Example 1. The obtained ink was applied in a thickness of 1.5 µm by offset printing on a steel panel (200 µm thick) pre-coated with polyester. A printing speed was 90 m/min, and curing was carried out by irradiation of ultraviolet rays at a peak illumination of 1,000 mW/cm² at an accumulated amount of ultraviolet rays of 50 mJ/cm² per one color-printing machine unit. 2nd layer (yellow pattern printing)

The following components were mixed in amounts mentioned below and then the mixture was subjected to milling and stirring with a three-roll mill to prepare a yellow ink having a tack value of 15.

| Components | Amount |
|---|---|
| Urethane compound (A1a) | 35 parts |
| Resin (B2a) | 35 parts |
| Yellow pigment | 15 parts |
| Ultraviolet curing catalyst 1 | 3 parts |
| Ultraviolet curing catalyst 2 | 3 parts |
| Hydroquinone (polymerization inhibitor) | 0.5 part |
| Aronix M-310 | Amount for obtaining a tack value of 15 |

As a yellow pigment, Permanent Yellow HR was used.

The obtained yellow ink was coated on the panel printed with the white pattern (1st layer) by using the same offset printing machine at the same printing speed and irradiation conditions as in the 1st layer to print a specific yellow pattern. 3rd layer (red pattern printing)

The following components were mixed in amounts mentioned below and then the mixture was subjected to milling and stirring with a three-roll mill to prepare a red ink having a tack value of 15.

| Components | Amount |
|---|---|
| Urethane compound (A1a) | 35 parts |
| Resin (B2a) | 35 parts |
| Red pigment | 15 parts |
| Ultraviolet curing catalyst 1 | 3 parts |
| Ultraviolet curing catalyst 2 | 3 parts |
| Hydroquinone (polymerization inhibitor) | 0.5 part |
| Aronix M-310 | Amount for obtaining a tack value of 15 |

As a red pigment, Permanent Pink E was used.

The obtained red ink was coated on the panel printed with the white pattern (1st layer) and the yellow pattern (2nd layer) by using the same offset printing machine at the same printing speed and irradiation conditions as in the 1st layer to print a specific red pattern.

### 4th layer (blue pattern printing)

The following components were mixed in amounts mentioned below and then the mixture was subjected to milling and stirring with a three-roll mill to prepare a blue ink having a tack value of 15.

| Components | Amount |
|---|---|
| Urethane compound (A1a) | 35 parts |
| Resin (B2a) | 35 parts |
| Blue pigment | 15 parts |
| Ultraviolet curing catalyst 1 | 3 parts |
| Ultraviolet curing catalyst 2 | 3 parts |
| Hydroquinone (polymerization inhibitor) | 0.5 part |
| Aronix M-310 | Amount for obtaining a tack value of 15 |

As a blue pigment, Phthalocyanine Blue was used.

The obtained blue ink was coated on the panel printed with the red pattern (3rd layer) by using the same offset printing machine at the same printing speed and irradiation conditions as in the 1st layer to print a specific blue pattern.

### 5th layer (green pattern printing)

The following components were mixed in amounts mentioned below and then the mixture was subjected to milling and stirring with a three-roll mill to prepare a green ink having a tack value of 15.

| Components | Amount |
|---|---|
| Urethane compound (A1a) | 35 parts |
| Resin (B2a) | 35 parts |
| Green pigment | 15 parts |
| Ultraviolet curing catalyst 1 | 3 parts |
| Ultraviolet curing catalyst 2 | 3 parts |
| Hydroquinone (polymerization inhibitor) | 0.5 part |
| Aronix M-310 | Amount for obtaining a tack value of 15 |

As a green pigment, Phthalocyanine Green was used.

The obtained green ink was coated on the panel printed with the blue pattern (4th layer) by using the same offset printing machine at the same printing speed and irradiation conditions as in the 1st layer to print a specific green pattern.

### 6th layer (black pattern printing)

The following components were mixed in amounts mentioned below and then the mixture was subjected to milling and stirring with a three-roll mill to prepare a black ink having a tack value of 15.

| Components | Amount |
|---|---|
| Urethane compound (A1a) | 37 parts |
| Resin (B2a) | 37 parts |
| Black pigment | 10 parts |
| Ultraviolet curing catalyst 1 | 3 parts |
| Ultraviolet curing catalyst 2 | 3 parts |
| Hydroquinone (polymerization inhibitor) | 0.5 part |
| Aronix M-310 | Amount for obtaining a tack value of 15 |

As a black pigment, Special Black 250 available from Degussa AG was used.

The obtained black ink was coated on the panel printed with the green pattern (5th layer) by using the same offset printing machine at the same printing speed and irradiation conditions as in the 1st layer to print a specific black pattern.

With respect to the so-obtained 6-color printed panel, adhesion test 1 and bending resistance test were carried out in the same manner as in Example 1. The result of the adhesion test 1 was 100/100, and no intercoat adhesion failure was recognized. The result of the bending resistance test was "A", and no intercoat adhesion failure was recognized. The object of the printed 6-color pattern showed a figure printing in a scenery, and a vivid printed article could be obtained.

### INDUSTRIAL APPLICABILITY

According to the active energy curable ink composition of the present invention, since the number of radically polymerizable double bonds of the reactive diluent is not more than three, shrinkage at curing can be reduced, thereby making it possible to enhance adhesion to a substrate and overcoatability.

On the other hand, by combination use of the urethane compound (A) and the resin (B) having an acid value, an intermolecular force between the urethane bond of the urethane compound (A) and the functional group of the resin (B) giving an acid value can compensate for reduction of a mechanical strength attributable to a decrease of crosslinking density which is caused as a result of making the number of radically polymerizable double bonds of the reactive diluent not more than three. This intermolecular force is much flexible as compared with solidification by crosslinking reaction, and therefore flexibility (bending resistance) required for post-processing can be improved.

Further the presence of these functional groups can enhance not only adhesion to a substrate but also adhesion between the coating films in multicoat printing.

Also since a polyisocyanate having an aromatic ring structure which has been usually used as a polyisocyanate component of urethane acrylate of conventional active energy curable ink composition is not used in the present invention, yellowing can be minimized and a brilliant printed article can be provided.

Also since a hydrophobic (surface tension: not more than 39 mN/m) reactive diluent is used, the composition can be used as an ink for offset printing and also as a general purpose ink.

## Claims

1. An active energy curable ink composition for multicoat printing which comprises (A) a urethane compound comprising a reaction product of a polyol component with a polyisocyanate component having no aromatic ring structure, (B) a resin having an acid value of 5 to 100 mgKOH/g and (C) a reactive diluent having radically polymerizable double bond, in which at least one of the compound (A) and the resin (B) has a radically polymerizable double bond, and only a compound having 1 to 3 radically polymerizable double bonds and having a surface tension of not more than 39 mN/m (at 20°C) is used as the reactive diluent (C).

2. The ink composition of Claim 1, wherein said urethane compound (A) does not have an aromatic ring structure.

3. The ink composition of Claim 1 or 2, wherein said resin (B) having an acid value is polyester.

4. The ink composition of any of Claims 1 to 3, wherein a functional group giving the acid value of the resin (B) is carboxyl.

5. The ink composition of any of Claims 1 to 4, wherein said urethane compound (A) has a radically polymerizable double bond.

6. The ink composition of any of Claims 1 to 5, wherein said resin (B) has a radically polymerizable double bond.

7. The ink composition of any of Claims 1 to 6, which further contains an active energy curing catalyst.
